(19) Europäisches Patentamt / European Patent Office / Office européen des brevets

(11) **EP 4 636 847 A1**

(12) **EUROPEAN PATENT APPLICATION**
published in accordance with Art. 153(4) EPC

(43) Date of publication:
**22.10.2025 Bulletin 2025/43**

(21) Application number: 23903644.5

(22) Date of filing: **15.06.2023**

(51) International Patent Classification (IPC):
$H01M\ 4/36^{(2006.01)}$    $C01G\ 53/00^{(2025.01)}$
$C01B\ 25/45^{(2006.01)}$    $H01M\ 10/052^{(2010.01)}$
$H01M\ 4/02^{(2006.01)}$

(52) Cooperative Patent Classification (CPC):
C01B 25/45; C01G 53/00; H01M 4/02; H01M 4/36;
H01M 10/052; Y02E 60/10

(86) International application number:
**PCT/KR2023/008277**

(87) International publication number:
**WO 2024/128439 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2022 KR 20220174735**

(71) Applicant: **SK On Co., Ltd.**
**Seoul 03161 (KR)**

(72) Inventor: **AN, Woo Hyun**
**Daejeon 34124 (KR)**

(74) Representative: **Stolmár & Partner**
**Patentanwälte PartG mbB**
**Blumenstraße 17**
**80331 München (DE)**

(54) **CATHODE ACTIVE MATERIAL FOR LITHIUM SECONDARY BATTERY, LITHIUM SECONDARY BATTERY COMPRISING SAME, AND METHOD OF PREPARING CATHODE ACTIVE MATERIAL FOR LITHIUM SECONDARY BATTERY**

(57) A cathode active material according to the embodiments of the present disclosure includes a core particle and a coating formed on the surface of the core particle and including a lithium phosphate compound containing a transition metal, and a difference between the maximum thickness and the minimum thickness of the coating may have a predetermined value. The cathode active material may be prepared using heterogeneous solvents that do not mix with each other. A lithium secondary battery with improved electrochemical stability and output characteristics may also be provided.

[FIG. 1]

Prepare mixture of
coating precursor and first solvent — S10

↓

Introduce second solvent into
mixture — S20

↓

Mix preliminary cation active
materials — S30

↓

Heat treatment
(fractional distillation) — S40

## Description

[Technical Field]

The present disclosure relates to a cathode active material for a lithium secondary battery, a lithium secondary battery including the same, and a method for preparing a cathode active material for a lithium secondary battery.

[Background Art]

A secondary battery is a battery that can be repeatedly charged and discharged. With rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

Since commercially available lithium secondary batteries mainly use liquid electrolytes until now, there are safety problems such as leakage, ignition, and explosion due to sudden environmental changes, including temperature fluctuations, external impacts and the like. To address these problems, attempts are being made to solidify the electrolyte, thereby enhancing stability and increasing energy density.

An all-solid-state battery may include an electrode assembly including a cathode, an anode, and an intermediate electrolyte layer, and may further include a separation membrane (separator) between the cathode and the anode. The all-solid-state battery may further include, for example, a pouch-type outer case to accommodate the electrode assembly.

Lithium metal oxide may be used as a cathode active material in the all-solid-state battery. As the application scope of lithium secondary batteries continues to expand, longer cycle life, high capacity and higher energy density are required. However, when the cathode active material comes into physical contact with a solid electrolyte, its reaction stability may deteriorate or its electronic conductivity may increase, and overvoltage may occur due to increased internal resistance and reduced ionic conductivity resulting from contact resistance.

For example, Korean Patent Laid-Open Publication No. 10-2018-0125408 discloses an electrode for an all-solid-state battery and a method for preparing the same.

[Summary of Invention]

[Problems to be Solved by Invention]

An object of the present disclosure is to provide a cathode active material with improved ionic conductivity and electrochemical stability.

Another object of the present disclosure is to provide a method for preparing a cathode active material with improved ionic conductivity and electrochemical stability.

In addition, another object of the present disclosure is to provide an all-solid-state battery including the cathode active material with improved ionic conductivity and electrochemical stability.

[Means for Solving Problems]

A cathode active material according to exemplary embodiments includes: a core particle; and a coating formed on a surface of the core particle and including a lithium phosphate compound containing a transition metal. A difference between a minimum thickness and a maximum thickness of the coating, measured in a cross-section of the coating, may be 17 nm or less.

In some embodiments, the difference between the maximum thickness and the minimum thickness of the coating measured in the cross-section of the coating may be 0.1 nm to 10 nm.

In some embodiments, the coating may have a thickness of 1 nm to 50 nm.

In some embodiments, the cathode active material may satisfy Equation 1 below:

[Equation 1]

$$(|T_M - T_E|/T_E) \times 100 \leq 20$$

In Equation 1 above, $T_E$ may be an average thickness value of the coating, and $T_M$ may be either the maximum thickness or the minimum thickness of the coating section.

In some embodiments, a content of the coating may be 0.1 parts by weight to 1 part by weight based on 100 parts by weight of the core particles.

In some embodiments, the lithium phosphate compound may contain titanium and at least one other metal different from titanium.

In some embodiments, the coating may include a compound represented by Formula 1 below:

[Formula 1] $\quad Li_a(M^{b+})_c P_d O_{(a+bc+5d)/2}$

In Formula 1 above, M may be at least one selected from the group consisting of Ti, B, Al, Y, Sc, Zr, V, Nb, Ta, Cr, Ga, Sn, Sb and W, and a, b, c and d may satisfy $0<a\leq5$, $1\leq b\leq5$, $1\leq c\leq5$, $0<d\leq8$.

In one embodiment, the coating may include a compound represented by Formula 2 below:

[Formula 2] $\quad Li_a(Ti^{e+})_x(M1^{f+})_y P_d O_{(a+ex+fy+5d)/2}$

In Formula 2 above, M1 may be at least one selected from the group consisting of B, Al, Y, Sc, Zr, V, Nb, Ta, Cr, Ga, Sn, Sb and W, and a, e, f, x, y and d may satisfy $0<a\leq5$, $1\leq e\leq4$, $1\leq f\leq5$, $0<x\leq1$, $0<y<5$, $1\leq x+y\leq5$, $0<d\leq8$.

In some embodiments, the core particles may have a median particle diameter ($D_{50}$) of 1 μm to 12 μm.

A lithium secondary battery according to exemplary embodiments may include: a cathode including the above-described cathode active material and a solid electrolyte; an anode disposed opposite to the cathode; and a solid electrolyte layer disposed between the cathode and the anode.

In a method for preparing a cathode active material according to exemplary embodiments, a first mixture including a lithium precursor, a coating metal precursor, a phosphorus precursor and a first solvent may be prepared. Then, a second mixture may be prepared by mixing a second solvent that is not miscible with the first solvent into the first mixture. Thereafter, preliminary cathode active material particles may be introduced into the second mixture to prepare a precursor solution, and the precursor solution may be heat-treated to form a coating including a lithium phosphate compound on a surface of the preliminary cathode active material particles.

According to exemplary embodiments, the lithium precursor, the coating metal precursor, and the phosphorus precursor may each be dissolved in the first solvent, but may be insoluble in the second solvent.

In some embodiments, the coating metal precursor may include a first coating metal precursor and a second coating metal precursor, and the first coating metal precursor may be a titanium precursor.

In some embodiments, the lithium phosphate compound may include a compound represented by Formula 2 below:

[Formula 2] $\quad Li_a(Ti^{e+})_x(M1^{f+})_y P_d O_{(a+ex+fy+5d)/2}$

In Formula 1 above, M1 may be at least one selected from the group consisting of B, Al, Y, Sc, Zr, V, Nb, Ta, Cr, Ga, Sn, Sb and W, and a, e, f, x, y and d may satisfy $0<a\leq5$, $1\leq e\leq4$, $1\leq f\leq5$, $0<x\leq1$, $0<y<5$, $1\leq x+y\leq5$, $0<d\leq8$.

In some embodiments, a difference in polarity index between the first solvent and the second solvent may be 4 or more.

In some embodiments, a content of the second solvent in the precursor solution may be less than that of the first solvent.

In some embodiments, the method may further include performing ultrasonic treatment on the precursor solution before heat-treating the precursor solution.

In some embodiments, by the ultrasonic treatment of the precursor solution, a first film including the second solvent may be formed on the preliminary cathode active material, and a second film including the first solvent may be formed on the first film.

In some embodiments, the step of heat-treating the precursor solution may include: heating the precursor solution to a first temperature to evaporate the second solution; and heating the precursor solution to a second temperature higher than the first temperature to evaporate the first solution.

For example, a boiling point of the first solvent may be higher than that of the second solvent. For example, the first temperature may be higher than or equal to the boiling point of the second solution and less than the boiling point of the first solution, and the second temperature may be higher than or equal to the boiling point of the first solution.

[Advantageous effects]

The cathode active material according to exemplary embodiments may include a core particle and a coating formed on the surface of the core particle and including a lithium phosphate compound. A difference between the maximum thickness and the minimum thickness of the coating may fall within a predetermined range. Accordingly, a thin and uniform buffer layer may be formed on the surface of the core particle, and the reaction stability and lithium ionic conductivity of the cathode active material may be improved.

The cathode active material may be prepared using heterogeneous solvents that do not mix with each other. In addition, the heterogeneous solvents may have different boiling points. Accordingly, a uniform coating may be formed on the surface of the core particle without causing physical defects or thermal damage to the core particle.

[Brief Description of Drawings]

FIG. 1 is a flowchart for describing the processes of a method for preparing a cathode active material according to exemplary embodiments.
FIG. 2 is a flowchart for describing the processes of a method for preparing a cathode active material according to exemplary embodiments.
FIGS. 3 and 4 are schematic views for describing a method for preparing a cathode active material according to exemplary embodiments, respectively.
FIG. 5 is a TEM image capturing a portion of a cathode active material particle according to Example 1.
FIG. 6 is a TEM image capturing a portion of the cathode active material particles according to Comparative Example 1.

[Mode for Carrying out Invention]

According to exemplary embodiments, a cathode active material including a lithium metal oxide, a cathode including the same, and a lithium secondary battery are provided.

Hereinafter, the embodiments of the present disclosure will be described in detail. However, these embodiments are merely examples, and the present disclosure is not limited to the specific embodiments described as example.

**<Cathode for a lithium secondary battery>**

A cathode active material for a lithium secondary battery according to exemplary embodiments (hereinafter, also abbreviated as a 'cathode active material') may include a core particle and a coating formed on a surface of the core particle.

The core particle may reversibly intercalate and deintercalate lithium ions and provide cathode activity. For example, the core particle may include a lithium metal oxide.

The core particle may include one or more compounds selected from lithium cobalt oxide, lithium manganese oxide, lithium nickel oxide, or lithium composite oxide. For example, the core particle may include layered compounds such as lithium cobalt oxide ($LiCoO_2$) or lithium nickel oxide ($LiNiO_2$); lithium manganese oxides such as $LiMnO_3$, $LiMn_2O_3$ and $LiMnO_2$; a lithium copper oxide ($Li_2CuO_2$); vanadium oxides such as $LiV_3O_8$, $LiFe_3O_4$, $V_2O_5$ and $Cu_2VO_7$; and a lithium iron phosphate oxide such as $LiFePO_4$.

In one embodiment, the core particle may include a compound represented by Formula 3 below.

[Formula 3] $Li_aNi_bM_{1-b}O_2$

In Formula 3, a may be in a range of $0.95 \leq a \leq 1.08$, b may be in a range of $b \geq 0.5$, and M may be Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba, Zr or a combination thereof.

In one embodiment, the core particle includes nickel (Ni), and may further include at least one of cobalt (Co) or manganese (Mn). For example, a nickel-cobalt-manganese (NCM)-based lithium oxide may be used as the core particle.

For example, nickel (Ni) may be provided as a metal associated with the capacity of the lithium secondary battery. The higher the content of nickel, the greater the improvement in capacity and output of the lithium secondary battery. However, if the content of nickel increases excessively, the cycle life of the lithium secondary battery may be reduced, and this may be disadvantageous in terms of mechanical and electrical stability.

In one embodiment, the conductivity or resistance of the lithium secondary battery may be improved by cobalt (Co), as well as the mechanical and electrical stabilities of the lithium secondary battery may be improved by manganese (Mn).

The chemical structure represented by Formula 3 shows a bonding relationship between elements included in the lattice structure or crystal structure of the core particle, and does not exclude other additional elements. For example, M may be provided as a main active element of the core particle. Here, it should be understood that Formula 3 is provided to express the bonding relationship between the main active elements, and is a formula encompassing the introduction and substitution of the additional elements.

In one embodiment, the cathode active material may further include auxiliary elements which are added to the main active elements, in order to enhance chemical stability thereof or the crystal structure. The auxiliary element may be incorporated into the crystal structure together to form a bond, and it should be understood that this case is also included within the chemical structure represented by Formula 3.

According to exemplary embodiments, the coating may include a lithium phosphate compound.

As the coating containing a lithium phosphate compound is formed on the surface of the core particle, direct contact between the core particle and the solid electrolyte may be blocked, and side reactions therebetween may be suppressed. In addition, an increase in interfacial resistance due to contact between the core particles may be prevented.

Therefore, since the coating may serve as a buffer layer for the core particles, damage and defects to the core particles may be suppressed, and the reaction stability and structural stability of the cathode active material may be improved.

In one embodiment, the lithium phosphate compound may contain a transition metal, for example, Ti, Y, Sc, Zr, V, Nb, Ta, Cr, and W.

Accordingly, the electrochemical stability and redox potential of the coating may be further increased, and the structural stability of the cathode active material may be improved even during high-temperature and high-voltage operation. In addition, irreversible decomposition of the solid electrolyte due to reaction with the cathode active material may be suppressed.

According to exemplary embodiments, a difference between the maximum thickness and the minimum thickness of the coating measured in the cross-section of the coating may be 17 nm or less. For example, the cross-section of the coating may refer to a two-dimensional plane of the coating observed in a direction perpendicular to the longest diameter direction of the cathode active material particle.

For example, the cross-section of the cathode active material particle may be captured using an electron microscope to obtain an image, and the thickness of the thickest portion in the cross-section of the coating may be set as the maximum thickness of the coating, and the thickness of the thinnest portion may be set as the minimum thickness. The coating thickness may be a vertical distance between an outer surface of the core particle and an outer surface of the coating.

In one embodiment, the electron microscope used herein may be a scanning electron microscope (SEM) or a transmission electron microscope (TEM).

Since the difference between the maximum thickness and the minimum thickness of the coating measured in the cross-section of the coating is 17 nm or less, the coating may thinly and uniformly cover the surface of the core particle. Accordingly, the stability and efficiency of the cathode active material may be improved.

For example, if the coating is non-uniformly formed on the surface of the core particles, the deviation in coating thickness of the cathode active material may increase across different regions. In this case, regions where the coating is formed thick may exhibit reduced ionic conductivity, and the pathways for lithium ion transport may be blocked. In addition, side reactions between the core particles may be concentrated in regions where the coating is formed thinly, leading to localized or accelerated deterioration of the cathode active material. Therefore, the energy density and cycle life characteristics of the cathode active material may be reduced, and the performance of the secondary battery may deteriorate under high-voltage and high-rate conditions.

According to exemplary embodiments, the difference between the maximum and minimum coating thicknesses measured in the cross-section of the coating may be adjusted to be 17 nm or less, so that a thin coating may be uniformly formed over the entire surface of the core particles. Accordingly, the electrochemical characteristics and reaction stability may be maintained uniformly over the entire surface region of the cathode active material, and the content of the coating for covering the core particles may be reduced, thereby improving the energy density of the cathode active material.

In one embodiment, the difference between the maximum thickness and the minimum thickness of the coating as measured in the cross-section of the coating may be 15 nm or less, 10 nm or less, 8 nm or less, or 5 nm or less. For example, the difference between the maximum thickness and the minimum thickness of the coating may be 0.01 nm to 17 nm or 0.1 nm to 10 nm.

In some embodiments, the thickness of the coating may satisfy Equation 1 below.

[Equation 1]

$$(|T_M - T_E|/T_E) \times 100 \leq 20$$

In Equation 1 above, $T_E$ may be an average thickness of the coating, which may be an arithmetic mean of coating thicknesses measured by an electron microscope at 20 or more points of the coating. $T_M$ may be either the maximum value or the minimum value among the measured coating thicknesses.

For example, the average thickness ($T_E$) of the coating may be an arithmetic mean of thickness values of the coating, obtained by measuring the cross-sectional images of the cathode active material particles in one or more, three or more, or five or more directions by SEM or TEM, and measuring the thicknesses in 20, 30, 50, 100, or 300 or more regions of the measured cross-sectional images. The accuracy and reliability of the measurement may increase as the number of measured cross-sectional images and measured areas increases.

Accordingly, the uniformity of the coating may be higher, and the initial efficiency and high-rate characteristics of the secondary battery may be further improved. For example, the heights of the protrusions and recesses may be substantially similar with respect to the average thickness of the coating, and high reaction stability and ionic conductivity may be provided over the entire surface region of the cathode active material particles.

In some embodiments, $(|T_M - T_E|/T_E) \times 100$ in Equation 1 may be 10 or less, or 5 or less.

In some embodiments, the average thickness of the coating may be 5 nm to 30 nm, or 10 nm to 20 nm. Within the above range, a thinner and more uniform coating may be formed on the core particles, thereby further preventing an increase in resistance and suppressing side reactions between the core particles caused by contact between them. Accordingly, the efficiency and cycle life of the secondary battery may be further improved.

In some embodiments, the coating may have a thickness of 1 nm to 50 nm. The thickness of the thinnest portion of the coating formed on the core particles may be 1 nm or more, and the thickness of the thickest portion may be 50 nm or less. For example, the coating may have a thickness of 3 nm to 30 nm, or 5 nm to 25 nm. Within the above range, the internal resistance and stability of the cathode active material may be further improved.

In some embodiments, the content of the coating may be 0.1 to 1 part by weight ("wt part") based on 100 wt parts of the core particles.

For example, if the content of the coating is less than the above-described range, the coating coverage on the core particles may be insufficient. Therefore, when the coating may exist on the core particles, for example, in the form of localized islands, it may be difficult to achieve uniform coverage. In addition, if the content of the coating exceeds the above-described range, the coating may be formed too thickly, and the internal resistance of the cathode active material may increase.

In some embodiments, the core particles may have a median particle diameter ($D_{50}$) of 1 $\mu$m to 12 $\mu$m. In one embodiment, the core particles may have a median particle diameter ($D_{50}$) of 2 $\mu$m to 12 $\mu$m, or 5 $\mu$m to 10 $\mu$m. The "median particle diameter ($D_{50}$)" may refer to the particle diameter at a cumulative volume fraction of 50% in the particle size distribution obtained by accumulating the particles in order of increasing particle diameter.

For example, when the median particle diameter of the core particles is less than the above-described range, the specific surface area of the particles may excessively increase, leading to an increase in side reactions with the electrolyte, and the electrode density and energy density may be reduced due to an increase in fine particles.

For example, when the median particle diameter of the core particles exceeds the above-described range, the migration distance of lithium ions may increase as the size of the particles increases, and the capacity characteristics and output characteristics of the lithium secondary battery may deteriorate.

In one embodiment, the core particles may have a particle diameter of 0.1 $\mu$m to 30 $\mu$m. For example, the core particles may have a particle diameter of 1 $\mu$m to 20 $\mu$m, or 1 $\mu$m to 12 $\mu$m. Within the above range, the core particles may have high structural stability, and the capacity and energy density of the secondary battery may be further improved. The "particle diameter" may refer to the maximum diameter or the longest dimension of the particles.

According to exemplary embodiments, the lithium phosphate compound may have a NASICON structure. For example, "NASICON" is an abbreviation for Na Super Ion Conductor, and may include $Na_{1+x}Zr_2Si_xP_{3-x}O_{12}$ (e.g., $Na_3Zr_2Si_2PO_{12}$ or $NaZr_2(PO_4)_3$).

In one embodiment, the lithium phosphate compound has a crystal structure identical to or similar to the NASICON compound, and may have a structure in which Na in the NASICON structure is substituted with Li and some or all of Zr is substituted with another transition metal such as Ti.

For example, the lithium phosphate compound has a lattice structure composed of a network of $MO_6$ (M is a metal such as Ti) octahedra connected by $PO_4$ tetrahedra, and Li ions may occupy sites within the gaps of the lattice structure. Therefore, high ionic conductivity may be achieved due to lithium ion jumping between gap sites of adjacent crystal lattices. In addition, the NASICON-type lithium phosphate compound may have low electronic conductivity, a wide electrochemical window, and high voltage stability, thereby further improving the capacity characteristics and cycle life characteristics of the secondary battery.

The metal (M) may include, for example, Ti, B, Al, Y, Sc, Zr, V, Nb, Ta, Cr, Ga, Sn, Sb, W, or a combination thereof, and in one embodiment, may include Ti.

According to exemplary embodiments, the lithium phosphate compound may be represented by Formula 1 below.

[Formula 1] $\quad Li_a(M^{b+})_c P_d O_{(a+bc+5d)/2}$

In Formula 1 above, M may be at least one metal element selected from the group consisting of Ti, B, Al, Y, Sc, Zr, V, Nb, Ta, Cr, Ga, Sn, Sb, and W. For example, M may include Ti.

In Formula 1 above, a may be in a range of $0<a\leq5$, c may be in a range of $1\leq c\leq5$, and d may be in a range of $0<d\leq8$. Further, b may be an integer representing the oxidation state of M, and may be in a range of $1\leq b\leq5$.

In some embodiments, the lithium phosphate compound may include two or more metals. For example, the lithium phosphate compound may include Ti and at least one other metal different from Ti. For example, the metal other than Ti may be at least one selected from the group consisting of B, Al, Y, Sc, Zr, V, Nb, Ta, Cr, Ga, Sn, Sb and W. Specifically, the metal other than Ti may be Al.

Within the lattice structure of the lithium phosphate compound, as Ti and other metals are substituted at the Ti site, the migration of lithium ions may become smoother. Accordingly, the coating may exhibit higher ionic conductivity, thereby enabling a lithium secondary battery with improved efficiency and rapid charging characteristics.

In some embodiments, the lithium phosphate compound may be represented by Formula 2 below.

[Formula 2] $\quad Li_a(Ti^{e+})_x(M1^{f+})_y P_d O_{(a+ex+fy+5d)/2}$

In Formula 2 above, M1 may be at least one selected from the group consisting of B, Al, Y, Sc, Zr, V, Nb, Ta, Cr, Ga, Sn, Sb and W.

a may be in a range of $0<a\leq5$, x may be in a range of $0<x\leq1$, y may be in a range of $0<y<5$, d may be in a range of $0<d\leq8$, and $1\leq x+y\leq5$. In addition, e may be an integer representing the oxidation state of Ti, and may be in a range of $1\leq e\leq4$. Further, f may be an integer representing the oxidation state of M1, and may be in a range of $1\leq f\leq5$.

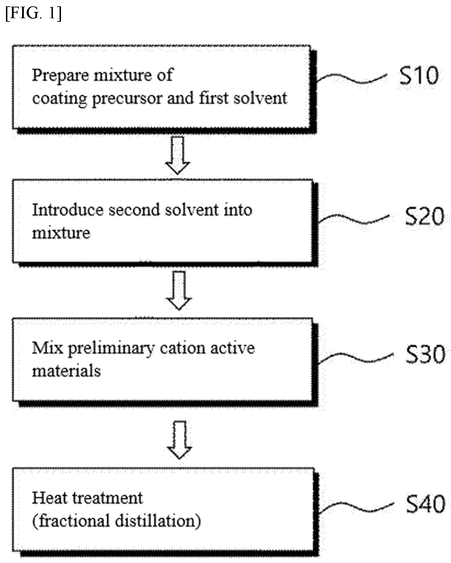

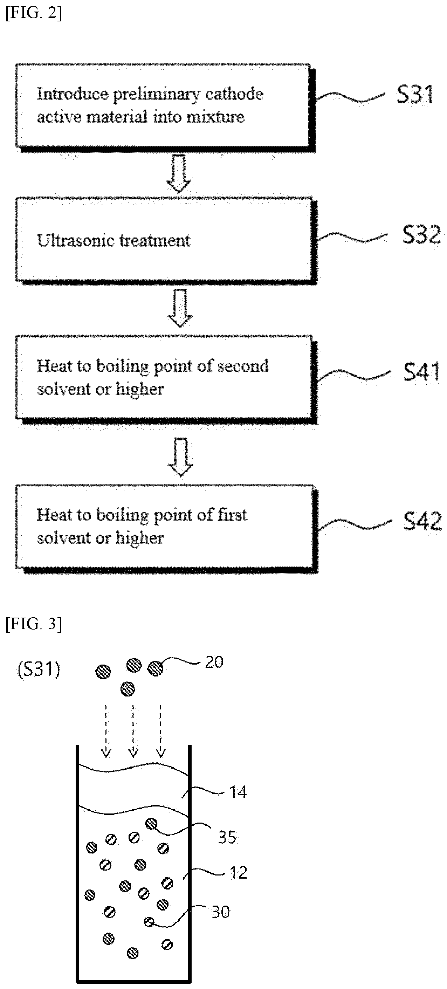

FIGS. 1 and 2 are flowcharts for describing the processes of a method for preparing a cathode active material according to exemplary embodiments, respectively. Hereinafter, the method for preparing the above-described cathode active material will be described with reference to FIGS. 1 and 2.

Referring to FIG. 1, a first mixture may be prepared by mixing a coating precursor with a first solvent (e.g., step S10).

The coating precursor may serve as a precursor for forming the above-described coating, and may include a lithium precursor, a coating metal precursor, and a phosphorus precursor.

For example, the lithium precursor may include lithium carbonate, lithium acetate, lithium phosphate, lithium oxalate, lithium oxide, lithium hydroxide, etc.

The phosphorus precursor may include orthophosphoric acid, triphosphoric acid, tetraphosphoric acid, trialkyl phosphate, etc.

In one embodiment, the coating metal precursor may include a titanium precursor. For example, a titanium-containing metal salt may be used as the titanium precursor, and the titanium-containing metal salt may include titanium oxide, titanium hydroxide, titanium alkoxide, titanium carbonate, titanium acetate, or a hydrate thereof.

In some embodiments, the coating metal precursor may include two or more coating metal precursors, for example, a first coating metal precursor and a second coating metal precursor different from the first coating metal precursor. The first coating metal precursor may be the above-described titanium precursor.

For example, the second coating metal precursor may include a metal other than Ti, for example, at least one selected from the group consisting of B, Al, Y, Sc, Zr, V, Nb, Ta, Cr, Ga, Sn, Sb and W.

In one embodiment, the second coating metal precursor may include a carbonate, an alkoxide, an oxide, a hydroxide, or the like containing the metal other than Ti. For example, the second coating metal precursor may include aluminum, for example, an aluminum alkoxide.

The coating precursors may be mixed in a ratio that satisfies the content or concentration ratio of each metal described with reference to Formula 1 or Formula 2.

In some embodiments, a compound that is dissolved in the first solvent may be used as the coating precursor. For example, when the first solvent is a polar solvent, the coating precursor may be polar, and when the first solvent is a non-polar solvent, the coating precursor may be non-polar.

In one embodiment, the coating precursor and the first solvent may be mixed at a speed of 100 rpm to 500 rpm for 1 minute to 20 minutes, and the mixing speed and time may be appropriately adjusted depending on the content of the coating precursor and the first solvent.

A second solvent may be mixed into the first mixture to prepare a second mixture (e.g., step S20).

The second solvent may be immiscible with the first solvent. The term "immiscible" used in the present application may refer to a condition in which a homogeneous mixture is not formed between heterogeneous solvents, and that layer separation occurs when another solvent is slowly added dropwise to one solvent. For example, it may refer to a relationship between a polar solvent and a nonpolar solvent, or a relationship between a watersoluble solvent and a fat-soluble solvent.

In some embodiments, a difference in polarity index between the first solvent and the second solvent may be 4 or more.

For example, when the first solvent is a polar solvent, the second solvent may be a nonpolar solvent. In this case, the lithium precursor, the coating metal precursor, and the phosphorus precursor may be polar.

For example, when the first solvent is a nonpolar solvent, the second solvent may be a polar solvent. In this case, the lithium precursor, the coating metal precursor, and the phosphorus precursor may not have polarity.

Therefore, since the coating precursor has a similar electron distribution or dipole moment to the first solvent, it may be selectively dissolved only in the first solvent, and may not dissolve in the second solvent with substantially different polarity.

The term "nonpolar" or "non-polar" as used herein means a state of very little or no polarity, and may be used as a relative concept in contrast to polar substances.

The second solvent may be added to the first mixture and mixed at a speed of 100 rpm to 500 rpm for 1 minute to 20 minutes. An emulsion of the second solvent may be formed in the second mixture by mixing described above

The preliminary cathode active material particles may be mixed into the second mixture to prepare a precursor solution (e.g., step S30).

The preliminary cathode active material particles may function as core particles of the cathode active material. For example, the above-described lithium metal oxide particles may be used as the preliminary cathode active material particles.

Referring to FIG. 2, the preliminary cathode active material particles may be added to the second mixture (e.g., step S31), and ultrasonic treatment may be performed on the second mixture (e.g., step S32).

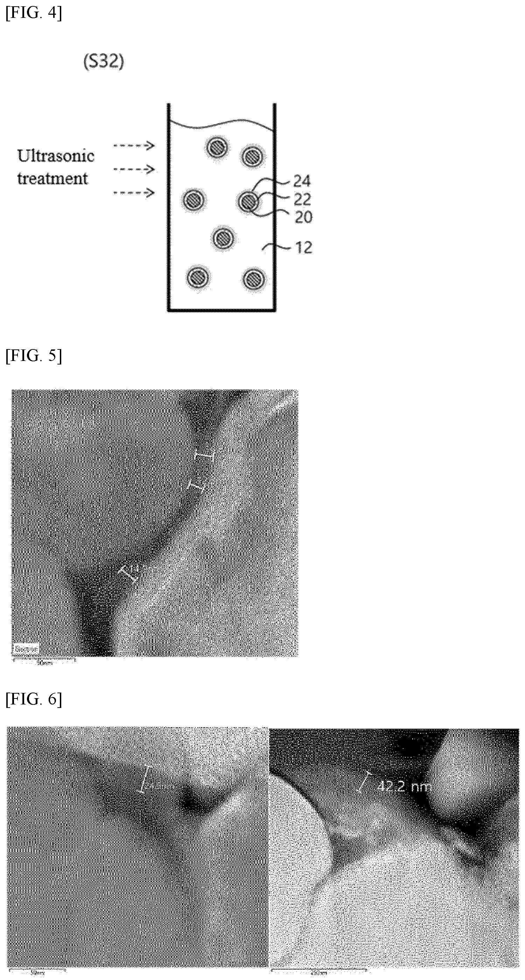

FIGS. 3 and 4 are schematic views for describing steps S31 and S32, respectively.

Referring to FIG. 3, preliminary cathode active material particles 20 may be introduced into the second mixture.

In one embodiment, since the first solvent 12 and the second solvent 14 do not mix with each other, the second mixture may be separated into a layer containing the first solvent 12 and a layer containing the second solvent 14.

In one embodiment, the second solvent 14 may exist in the form of an emulsion within the first solvent 12. For example, since the second solvent 14 has a different polarity from the first solvent 12, the cohesive force of the second solvent 14 may be relatively strong, and it may therefore exist as aggregated droplets within the first solvent 12.

Since the coating precursors 30 and 35 are insoluble in the second solvent 14, they may be selectively dissolved in the first solvent 12. For example, the coating precursors 30 and 35 may substantially exist only within the first solvent 12.

Referring to FIG. 4, sonication treatment may be performed on the second mixture into which the preliminary cathode active material particles 20 are introduced.

As the sonication treatment is performed on the second mixture, the second solvent 14 is dispersed in the first solvent 12 to form an emulsion, and the surface of the preliminary cathode active material particles 20 dispersed in the first solvent 12 may be covered. Accordingly, a film 22 including the second solvent 14 may be formed on the surface of the preliminary cathode active material particles 20.

In one embodiment, the sonication treatment may be performed under conditions of a frequency of 10 kHz to 30 kHz and an intensity of 500 W to 800 W. For example, the sonication treatment may be performed at a frequency of about 20 kHz and an intensity of about 700 W.

In one embodiment, the ultrasonic treatment may be performed while the second mixture is sealed for 2 minutes or more, 3 minutes or more, or 5 minutes or more, and for example, for 5 minutes to 20 minutes.

Within the above range, the coating precursor present in the first solvent 14 may be prevented from reacting or precipitating due to the energy from the ultrasonic treatment.

The content of the second solvent in the second mixture or the precursor solution may be lower than that of the first solvent. Accordingly, the second solvent 14 having a lower content may form the film 22 on the surface of the preliminary cathode active material particle 20, and the first solvent 12 having a larger content may serve as a base solvent in the precursor solution.

In one embodiment, a first film 22 including a second solvent 14 and a second film 24 surrounding the first film 22 and including the first solvent 12 may be formed by the ultrasonic treatment.

In one embodiment, the content of the first solvent 12 in the second mixture or the precursor solution may be at least twice that of the second solvent 14, for example, at least three times, at least four times, or at least 4.5 times. In addition, the content of the first solvent 12 may be at most ten times, at most nine times, or at most eight times the content of the second solvent 14.

Within the above range, the second solvent 14 may form a more stable emulsion in the second mixture, and may form a more uniform film on the surface of the preliminary cathode active material particles 20 in the precursor solution.

Accordingly, a droplet structure of the preliminary cathode active material particles 20, the first film 22 including the second solvent, and the second film 24 including the first solvent may be formed in the precursor solution by ultrasonic treatment.

For example, if the content of the first solvent is less than twice that of the second solvent, even if ultrasonic treatment is performed, the first solvent and the second solvent may exist in a layer-separated state in the precursor solution. Therefore, a film including the second solvent may not be formed on the preliminary cathode active material particle 20.

In addition, if the content of the first solvent is significantly greater than that of the second solvent, the second solvent may become substantially miscible with the first solvent, so that an emulsion may not be formed in the second mixture. Therefore, a film may not be formed on the preliminary cathode active material particle 20.

The precursor solution may be heat-treated to form a coating on the surface of the preliminary cathode active material particles (e.g., step S40). The coating may include a lithium phosphate compound.

According to exemplary embodiments, the precursor solution may be heated to a first temperature to evaporate the second solution (e.g., step S41), and then heated to a second temperature higher than the first temperature to evaporate the first solution (e.g., step S42).

In some embodiments, the boiling point of the first solvent may be higher than that of the second solvent. Therefore, the first solvent and the second solvent may be selectively evaporated.

The first temperature may be higher than or equal to the boiling point of the second solvent and less than the boiling point of the first solvent. Therefore, by heating the precursor solution to the first temperature, only the second solvent may be evaporated, and the first solvent may remain in the precursor solution.

The second temperature may be higher than the boiling point of the first solvent. Therefore, by heating the precursor solution to the second temperature, the first solvent may be evaporated, and the coating precursors dissolved in the first solvent may form a coating on the surface of the preliminary cathode active material particles.

For example, the coating precursors may react with each other during the heat treatment step to form a lithium phosphate compound. The lithium phosphate compound may form a coating on the preliminary cathode active material particles as a result of the evaporation of the first solvent.

By selectively evaporating the first solvent and the second solvent, the uniformity of the coating may be further improved. For example, as the first film surrounding the preliminary cathode active material particles is gradually removed, the coating precursors dissolved in the second film may uniformly coat the surface of the preliminary cathode active material particles.

Thereafter, as the first solvent evaporates, the coating precursor that uniformly covers the surface of the preliminary cathode active material particles reacts to form a lithium phosphate compound, and a uniform coating may be formed on the surface of the preliminary cathode active material particles.

In one embodiment, the difference between the first temperature and the boiling point of the second solvent may be 10°C or less, or 5°C or less. The difference between the second temperature and the boiling point of the first solvent may be 10°C or less, or 5°C or less. Accordingly, the evaporation rates of the second solvent and the first solvent may be appropriately adjusted, and the coating uniformity may be further improved.

In some embodiments, the heat treatment process may be performed under a pressure of 500 mbar to 1,000 mbar.

In some embodiments, a calcination process may be further performed on the obtained cathode active material to remove residual solvent and increase the crystallinity of the coating.

In one embodiment, the calcination temperature may be in the range of about 150°C to 600°C, or in the range of 200°C to 400°C. The calcination may be performed for 30 minutes or more, and for example, the calcination time may be 1 hour to 2 hours.

According to exemplary embodiments, since the coating is formed on the cathode active material particles using heterogeneous solvents that do not mix with each other under predetermined process conditions, the coating uniformity may be improved. Therefore, the initial efficiency and high-rate characteristics of the lithium secondary battery may be improved, and the cycle life characteristics may be improved due to high reaction stability and low electronic conductivity.

**<Lithium secondary battery>**

A lithium secondary battery according to exemplary embodiments may include a cathode composite including the above-described cathode active material and an anode disposed opposite to the cathode composite.

The cathode composite may include the above-described cathode active material, a solid electrolyte, and a conductive material. For example, a preliminary cathode composite may be prepared by mixing the cathode active material with a solid electrolyte, a conductive material, and/or a binder, and stirring. Then, the preliminary cathode composite may be pressurized to form the final cathode composite.

According to some embodiments, a sulfide-based electrolyte may be used as the solid electrolyte.

For example, the sulfide-based solid electrolyte may be represented by Formula 4 below.

[Formula 4]     $Li_eY_fP_gS_hZ_i$

In Formula 4 above, e may be in a range of $0 < e < 12$, f may be in a range of $0 \leq f \leq 6$, g may be in a range of $0 \leq g \leq 6$, h may be in a range of $0 \leq h \leq 12$, i may be in a range of $0 \leq i \leq 9$, Y is at least one element selected from the group consisting of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and Z may be at least one element selected from the group consisting of F, Cl, Br and I.

In some embodiments, the sulfide-based solid electrolyte may be an LPS-based solid electrolyte including Li, P and S, an LGPS-based solid electrolyte including Li, P, Ge and S, or an LSiPSCl-based solid electrolyte including Li, Si, P, S, and Cl.

For example, as the sulfide-based solid electrolyte, $Li_2S-P_2S_5$, $Li_{10}GeP_2S_{12}$, $Li_{10}SnP_2S_{12}$, $Li_{9.54}Si_{1.74}P_{1.44}S_{11.7}Cl_{0.3}$, $Li_{10}(Si_{0.5}Ge_{0.5})P_2S_{12}$, $Li_{10}(Ge_{0.5}Sn_{0.5})P_2S_{12}$, $Li_{10}(Si_{0.5}Sn_{0.5})P_2S_{12}$, $Li_{10}GeP_2S_{11.7}O_{0.3}$, $Li_{9.6}P_3S_{12}$, $Li_9P_3S_9O_3$, $Li_{10.35}Ge_{1.35}P_{1.65}S_{12}$, $Li_{10.35}Si_{1.35}P_{1.65}S_{12}$, $Li_{9.81}Sn_{0.81}P_{2.19}S_{12}$, $Li_{9.42}Si_{1.02}P_{2.1}S_{9.96}O_{2.04}$, $Li_6PS_5Cl$, etc. may be used.

The conductive material may be included to promote electron migration between the cathode active material particles. For example, the conductive material may include carbon-based conductive materials such as graphite, carbon black, graphene, carbon nanotubes, etc., and/or metal-based conductive materials including perovskite-type compounds such as tin, tin oxide, titanium oxide, $LaSrCoO_3$, $LaSrMnO_3$, etc.

In some embodiments, the preliminary cathode composite may further include a binder. For example, the binder may include vinylidene fluoride-hexafluoropropylene copolymer (PVDF-co-HFP), polyvinylidene fluoride (PVDF), polyacrylonitrile, polymethyl methacrylate, nitrile butadiene rebber, and the like.

In exemplary embodiments, the preliminary cathode composite may be pressurized to form the cathode composite. The pressurization process may be performed by flat plate pressurization using a uniaxial press, or by isostatic pressurization using a triaxial press.

In some embodiments, the pressurization may be an isostatic pressurization process, and may be performed by processes using a warm isostatic press (WIP), a cold isostatic press (CIP), or a roll press, for example.

In some embodiments, the pressurization may be performed by a cold isostatic pressing (CIP) process, and the preliminary cathode composite may be sealed in a packaging material, and then pressurized by the cold isostatic pressing process using, for example, a cold isostatic press (CIP). In this case, unlike flat plate pressurization, the stress may be applied uniformly from all directions, thereby suppressing the warpage of the cathode composite.

In some embodiments, the pressurization may be performed at a pressure of 200 MPa to 800 MPa for 10 seconds to 1 minute, for example, at a pressure of 300 MPa to 600 MPa for 10 seconds to 40 seconds. Within the above range, the adhesion between the cathode active material particles and the solid electrolyte may be increased.

The anode may be used in the form of an anode composite formed by pressurizing the anode active material and the solid electrolyte, or in the form of the anode active material alone. In the case of pressurization, it may be performed by flat plate pressurization using the above-described press type, or by isotropic pressurization using a three-axis press.

The anode active material usable herein may include any material known in the related art, as long as it can intercalate and deintercalate lithium ions, without particular limitation thereof. For example, carbon-based materials such as crystalline carbon, amorphous carbon, carbon composite, carbon fiber, etc.; a lithium alloy; silicon or tin may be used. Examples of the amorphous carbon may include hard carbon, cokes, mesocarbon microbead (MCMB) calcined at 1500°C or lower, mesophase pitch-based carbon fiber (MPCF) or the like. Examples of the crystalline carbon may include graphite-based carbon such as natural graphite, graphite cokes, graphite MCMB, graphite MPCF or the like. Other elements included in the lithium alloy may include, for example, aluminum, zinc, bismuth, cadmium, antimony, silicon, lead, tin, gallium, indium or the like.

The cathode composite and the anode composite in each electrode cell may each include a cathode current collector and an anode current collector.

The cathode current collector may include stainless steel, nickel, aluminum, titanium, copper, or an alloy thereof, and may include, for example, aluminum or an aluminum alloy.

The anode current collector may include gold, stainless steel, nickel, aluminum, titanium, copper, or an alloy thereof, and may include, for example, copper or a copper alloy.

Electrode tabs (a cathode tab and an anode tab) may protrude from the cathode current collector and the anode current collector, respectively, and may extend to one side of a case of the secondary battery. The electrode tabs may be fused together with the one side of the case to form electrode leads (a cathode lead and an anode lead) that extend or are exposed to the outside of the case.

According to exemplary embodiments, a solid electrolyte layer may be interposed between the cathode composite and the anode composite.

In one embodiment, the solid electrolyte layer may include a sulfide-based solid electrolyte. The sulfide-based electrolyte may be identical to or different from the sulfide-based solid electrolyte included in the cathode composite.

The solid electrolyte layer may include an LPS-based solid electrolyte, an LGPS-based solid electrolyte or an LSiPSCl-based solid electrolyte, for example, $Li_2S\text{-}P_2S_5$, $Li_{10}GeP_2S_{12}$, $Li_{10}SnP_2S_{12}$, $Li_{9.54}Si_{1.74}P_{1.44}S_{11.7}Cl_{0.3}$, $Li_{10}(Si_{0.5}Ge_{0.5})P_2S_{12}$, $Li_{10}(Ge_{0.5}Sn_{0.5})P_2S_{12}$, $Li_{10}(Si_{0.5}Sn_{0.5})P_2S_{12}$, $Li_{10}GeP_2S_{11.7}O_{0.3}$, $Li_{9.6}P_3S_{12}$, $Li_9P_3S_9O_3$, $Li_{10.35}Ge_{1.35}P_{1.65}S_{12}$, $Li_{0.35}Si_{1.35}P_{1.65}S_{12}$, $Li_{9.81}Sn_{0.81}P_{2.19}S_{12}$, $Li_{9.42}Si_{1.02}P_{2.1}S_{9.96}O_{2.04}$, $Li_6PS_5Cl$, etc. may be used.

According to exemplary embodiments, an electrode cell is defined by the cathode composite, the anode composite, and the solid electrolyte layer, and a plurality of electrode cells may be stacked to form an electrode assembly. For example, the electrode assembly may be formed by winding, laminating, folding, etc. the solid electrolyte layer.

The electrode assembly may be accommodated in the case to define a lithium secondary battery. The lithium secondary battery may be manufactured, for example, in a cylindrical shape using a can, a prismatic shape, a pouch shape or a coin shape.

Hereinafter, experimental examples including specific examples and comparative examples are proposed to facilitate understanding of the present invention. However, the following examples are only given for illustrating the present invention and are not intended to limit the appended claims. It will be apparent to those skilled in the art that various alterations and modifications are possible within the scope and spirit of the present invention, and such alterations and modifications are duly included in the appended claims.

**Preparative Example**

**(1) Preparation of preliminary cathode active material particles**

$NiSO_4$, $CoSO_4$, and $MnSO_4$ were mixed in a ratio of 88:9:3 using distilled water from which dissolved oxygen had been removed by bubbling $N_2$ for 24 hours. The mixed solution was introduced into a reactor at 50°C, and NaOH and $NH_3H_2O$ were used as a precipitant and a chelating agent, respectively, followed by performing co-precipitation for 48 hours to obtain $Ni_{0.88}Co_{0.09}Mn_{0.03}(OH)_2$ as a transition metal precursor. The obtained precursor was dried at 80 °C for 12 hours, and then further dried at 110 °C for 12 hours.

Lithium hydroxide and the transition metal precursor were added to a dry high-speed mixer in a ratio of 1.01:1 to 1.025:1 and uniformly mixed for 5 minutes. The mixture was placed in a calcination furnace, heated to a temperature between 730 and 750°C at a heating rate of 2°C/min, and maintained within the range 730 to 750°C for 10 hours. Oxygen was continuously supplied at a flow rate of 10 mL/min during the heating and maintenance. After completion of the calcination, the mixture was naturally cooled to room temperature, then pulverized and classified to obtain preliminary cathode active material particles of cathode active material $LiNi_{0.88}Co_{0.09}Mn_{0.03}O_2$ ($D_{50}$: 10 $\mu$m).

**(2) Preparation of cathode active material**

**Example 1**

2.1 mg of lithium acetate as a lithium precursor, 2.18 mg of aluminum ethoxide and 11.3 $\mu$l of titanium ethoxide as transition metal precursors, and 18 $\mu$l of triethyl phosphate as a phosphate compound were mixed.

Thereafter, 10 ml of acetonitrile as a first solvent was added thereto and stirred at 300 rpm for 10 minutes to prepare a first mixture.

2 ml of hexane as a second solvent was added to the prepared first mixture and stirred at 300 rpm for 10 minutes to prepare a second mixture. 5 g of $LiNi_{0.88}CO_{0.09}Mn_{0.03}O_2$ particles were added to the prepared second mixture, and the mixture was subjected to ultrasonic treatment to prepare a dispersion.

The ultrasonic treatment was performed for 5 to 10 minutes using a tower-type ultrasonic grinder (STH-750S), while the second mixture was sealed, under conditions of a frequency of 20 kHz and an a power output of 700 W.

The prepared dispersion was placed in a rotary evaporator (BUCHI, R-100), and the vacuum level of the rotary evaporator was set to about 800 mbar. The temperature of the oil bath in the rotary evaporator was increased to about 69°C to evaporate hexane, and then further increased to 83°C to evaporate acetonitrile.

Thereafter, heat treatment was performed at a temperature of 280°C for 1 hour to remove the residual solvent, and a coating of $LiTi_{1.6}Al_{0.4}(PO_4)_3$ crystals was formed on the $LiNi_{0.88}CO_{0.09}Mn_{0.03}O_2$ particles. Cathode active material particles according to Example 1 were thus obtained.

**Example 2**

Cathode active material particles according to Example 2 were prepared in the same manner as in Example 1, except that 7 ml of acetonitrile was used as the first solvent and 5 ml of hexane was used as the second solvent.

### Example 3

Cathode active material particles according to Example 3 were prepared in the same manner as in Example 1, except that 11 ml of acetonitrile was used as the first solvent and 1 ml of hexane was used as the second solvent.

### Comparative Example 1

2.1 mg of lithium acetate as a lithium precursor, 2.18 mg of aluminum ethoxide and 11.3 $\mu$l of titanium ethoxide as transition metal precursors, and 18 $\mu$l of triethyl phosphate as a phosphate compound were mixed.

Thereafter, 12 ml of ethanol as a solvent was added thereto and stirred at 300 rpm for 10 minutes to prepare a mixture. Then, 5 g of the prepared $LiNi_{0.88}CO_{0.09}Mn_{0.03}O_2$ particles were added to the prepared mixture, and ultrasonic treatment was performed in the same manner as in Example 1 to prepare a dispersion.

The prepared dispersion was placed in a rotary evaporator (BUCHI, R-100) set to a vacuum of about 800 mbar, and the temperature of the oil bath of the rotary evaporator was increased to about 79°C to evaporate ethanol. Thereafter, heat treatment was performed at a temperature of 280°C for 1 hour to remove the residual solvent, and cathode active material particles according to Comparative Example 1 were obtained.

### Comparative Example 2

Cathode active material particles according to Comparative Example 2 were obtained in the same manner as Comparative Example 1, except that 12 ml of acetonitrile was used instead of ethanol as a solvent, and the temperature of the oil bath of the rotary evaporator was increased to about 83°C.

### Comparative Example 3

Cathode active material particles according to Comparative Example 3 were obtained in the same manner as Comparative Example 1, except that 2 ml of hexane was used instead of ethanol as a solvent, and the temperature of the oil bath of the rotary evaporator was increased to about 69°C.

### Comparative Example 4

Cathode active material particles according to Comparative Example 4 were prepared in the same manner as Example 1, except that 10 ml of acetonitrile was used as the first solvent, and 2 ml of ethanol was used as the second solvent.

### Experimental Example 1

#### (1) Measurement of coating thickness

TEM analysis was performed on the cross-section of the cathode active material particles prepared above using a transmission electron microscope (FEI, Tecnai G2 F30) to measure the coating thickness. The thickness of the thickest portion of the coating formed on the cathode active material particles was measured as the maximum coating thickness, and the thickness of the thinnest portion was measured as the minimum coating thickness.

The coating thickness deviation was calculated by subtracting the minimum coating thickness from the maximum coating thickness. The evaluation results are described in Table 1 below.

In Table 1 below, "-" indicates that the coating thickness could not be measured.

In the case of Comparative Examples 2 and 3, a film-like coating covering the surface of the cathode active material particles was not observed, and only localized island-shaped coatings were formed on specific regions of the particle surfaces. Therefore, since a uniform coating was not formed in Comparative Examples 2 and 3, the minimum and maximum coating thicknesses could not be measured.

The measurement results are shown in Table 2 below.

#### (2) Measurement of coating coverage

The prepared cathode active material particles were analyzed using a scanning electron microscope (FEI, Nova nano SEM 450) and an energy dispersive spectrometer (EDS) to measure the distribution of Ti elements on the surface of the cathode active material particles. Specifically, the area of the region occupied by the Ti elements was calculated based on the EDS mapping images of the cathode active material surfaces to evaluate the coating coverage resulting from the distribution of Ti elements.

The relative Ti element distribution values for the cathode active material particles of the other examples and comparative examples were calculated by normalizing them to the Ti element distribution value measured in the cathode active material particles of Example 1, which was set to 1.

The measurement results are shown in Table 1 below.

[TABLE 1]

| | Maximum coating thickness (nm) | Minimum coating thickness (nm) | Thickness deviation (nm) | Coating coverage |
|---|---|---|---|---|
| Example 1 | 16.1 | 12.3 | 3.9 | 1 |
| Example 2 | 18.7 | 8.4 | 10.3 | 0.76 |
| Example 3 | 22.0 | 5.9 | 16.1 | 0.60 |
| Comparative Example 1 | 42.2 | 24.5 | 17.7 | 0.55 |
| Comparative Example 2 | - | - | - | 0.32 |
| Comparative Example 3 | - | - | - | 0.02 |
| Comparative Example 4 | 50.3 | 18.2 | 32.1 | 0.36 |

Referring to Table 1 above, it can be confirmed that the cathode active materials according to the examples exhibit improved coating uniformity by forming a coating using heterogeneous solvents that do not mix with each other.

However, in Comparative Example 1, which used only a single solvent, the coating was non-uniformly formed, and the deviation in coating thickness increased across different regions. In addition, Comparative Examples 2 and 3 had low coating coverage, and the coating thickness could not be measured because the coating was formed only in localized regions.

In Comparative Example 3, which used a solvent in which the coating material was dissolved, a coating was barely formed on the surface of the cathode active material particles. In Comparative Example 4, which used miscible heterogeneous solvents, it can be confirmed that the coating uniformity was reduced.

FIG. 5 is a TEM image of the cathode active material particles according to Example 1. FIG. 6 is a TEM image of the cathode active material particles according to Comparative Example 1.

Referring to FIG. 5, it can be confirmed that a uniform coating was formed on the surface of the cathode active material particles according to Example 1.

Referring to FIG. 6, it can be confirmed that the cathode active material particles according to Comparative Example 1 include an uneven coating, and that the coating thickness deviation depending on the region of the particle surface was large.

## Experimental Example 2

### (1) Manufacturing of lithium secondary battery

A secondary battery was manufactured using the cathode active material prepared above. Specifically, the cathode active materials of the examples and comparative examples, solid electrolyte ($Li_6PS_5Cl$), and conductive material (Super P) were mixed in a mass ratio of 68:29.1:2.91 to prepare a cathode composite.

A solid electrolyte ($Li_6PS_5Cl$) with a density of 10 mg/cm$^2$ was placed in a SUS circular mold having a diameter of $\Phi$13 and molded using a uniaxial cold isostatic press (CIP) at 80 MPa to fabricate a solid electrolyte pellet. The cathode composite was placed on one side of the solid electrolyte pellet with a density of 10 mg/cm$^2$, pressed at 350 MPa to form a pellet. Then, an In foil was placed on the other side and pressed at 50 MPa to manufacture an electrode cell having a structure of cathode composite/solid electrolyte/In anode. The electrode cell was assembled into a coin cell outer case having a diameter of $\Phi$20.

### (2) Evaluation of initial efficiency

The manufactured coin cell was charged (CC-CV 0.1C, 4.3V, 0.01C cut-off) and discharged (CC 0.1C, 2.5V cut-off) at 30°C to measure the initial charge and discharge amounts. The initial efficiency was evaluated as the percentage of the initial discharge capacity (A2) to the initial charge capacity (A1), as shown in Equation 2 below.

[Equation 2]

$$\text{Initial efficiency (\%)} = A2/A1 \times 100\%$$

The evaluation results are described in Table 2 below.

(3) Evaluation of high-rate characteristic

The manufactured coin cell was charged and discharged at 0.1C for initial 3 cycles at a temperature of 30°C under cut-off conditions of charging at 4.3V and discharging at 2.5V, and the discharge capacity (B1) in the first cycle was measured. Thereafter, 2 cycles of charge and discharge were performed at a rate of 0.2C, and 2 additional cycles of charge and discharge were performed at a rate of 0.5C. Subsequently, the cell was charged and discharged at 1C, and the discharge capacity (B2) was measured.

The high-rate characteristics were evaluated as the percentage of the discharge capacity (B2) at high rate (1C) relative to the discharge capacity (B1) at low rate (0.1C), as shown in Equation 3 below.

[Equation 3]

$$\text{High-rate characteristic (\%)} = B2/B1 \times 100\%$$

The evaluation results are described in Table 2 below.

[TABLE 2]

|  | Initial efficiency (%) | High-rate charging characteristics (%) |
|---|---|---|
| Example 1 | 73.3 | 53.2 |
| Example 2 | 73.1 | 51.4 |
| Example 3 | 72.7 | 50.1 |
| Comparative Example 1 | 72.6 | 49.7 |
| Comparative Example 2 | 71.3 | 45.7 |
| Comparative Example 3 | 70.4 | 35 |
| Comparative Example 4 | 72.0 | 47.1 |

Referring to Tables 1 and 2, in the case of the secondary batteries according to the examples, the deviation in coating thickness of the cathode active material particles was small, and they exhibited high initial efficiency and excellent high-rate charging characteristics.

However, in the case of the secondary batteries according to the comparative examples, the initial efficiency was generally low, and the high-rate charging characteristics were significantly degraded.

In Comparative Examples 1 and 4, although the coating coverage on the cathode active material particles was high, the large deviation in coating thickness resulted in lower charging characteristics and efficiency at high rates compared to the examples.

In Comparative Examples 2 and 3, either no coating was formed on the surface of the cathode active material particles or the coating coverage was low. As a result, the high-rate charging characteristics were significantly reduced, and low initial efficiency was observed due to low ionic conductivity.

In the case of the examples, heterogeneous solvents that do not mix with each other were used during the coating process, and by satisfying predetermined process conditions, a coating with thin and uniform thickness was successfully formed.

**Claims**

1.    A cathode active material comprising:

      a core particle; and

a coating formed on a surface of the core particle and comprising a lithium phosphate compound containing a transition metal,
wherein a difference between a minimum thickness and a maximum thickness of the coating, measured in a cross-section of the coating, is 17 nm or less.

2. The cathode active material according to claim 1, wherein the difference between the maximum thickness and the minimum thickness of the coating measured in the cross-section of the coating is 0.1 nm to 10 nm.

3. The cathode active material according to claim 1, wherein the coating has a thickness of 1 nm to 50 nm.

4. The cathode active material according to claim 1, wherein the cathode active material satisfies Equation 1 below:

$$[\text{Equation 1}]$$

$$(|T_M - T_E|/T_E) \times 100 \leq 20$$

(in Equation 1 above, $T_E$ is an average thickness value of the coating, and $T_M$ is either the maximum thickness or the minimum thickness of the coating).

5. The cathode active material according to claim 1, wherein a content of the coating is 0.1 parts by weight to 1 part by weight based on 100 parts by weight of the core particles.

6. The cathode active material according to claim 1, wherein the lithium phosphate compound contains titanium and at least one other metal different from titanium.

7. The cathode active material according to claim 1, wherein the coating comprises a compound represented by Formula 1 below:

[Formula 1] $\quad Li_a(M^{b+})_c P_d O_{(a+bc+5d)/2}$

(in Formula 1 above, M is at least one selected from the group consisting of Ti, B, Al, Y, Sc, Zr, V, Nb, Ta, Cr, Ga, Sn, Sb and W, and a, b, c and d satisfy $0<a\leq5$, $1\leq b\leq5$, $1\leq c\leq5$, $0<d\leq8$).

8. The cathode active material according to claim 1, wherein the coating comprises a compound represented by Formula 2 below:

[Formula 2] $\quad Li_a(Ti^{e+})_x(M1^{f+})_y P_d O_{(a+ex+fy+5d)/2}$

(in Formula 2 above, M1 is at least one selected from the group consisting of B, Al, Y, Sc, Zr, V, Nb, Ta, Cr, Ga, Sn, Sb and W, and a, e, f, x, y and d satisfy $0<a\leq5$, $1\leq e\leq4$, $1\leq f\leq5$, $0<x\leq1$, $0<y<5$, $1\leq x+y\leq5$, $0<d\leq8$).

9. The cathode active material according to claim 1, wherein the core particles have a median particle diameter ($D_{50}$) of 1 $\mu$m to 12 $\mu$m.

10. A lithium secondary battery comprising:

a cathode comprising the cathode active material of claim 1 and a solid electrolyte;
an anode disposed opposite to the cathode; and
a solid electrolyte layer disposed between the cathode and the anode.

11. A method for preparing a cathode active material comprising:

preparing a first mixture comprising a lithium precursor, a coating metal precursor, a phosphorus precursor and a first solvent;
preparing a second mixture by mixing a second solvent that is not miscible with the first solvent into the first mixture;
introducing preliminary cathode active material particles into the second mixture to prepare a precursor solution;

and
heat-treating the precursor solution to form a coating comprising a lithium phosphate compound on a surface of the preliminary cathode active material particles.

12. The method for preparing a cathode active material according to claim 11, wherein the lithium precursor, the coating metal precursor, and the phosphorus precursor are each dissolved in the first solvent, but are insoluble in the second solvent.

13. The method for preparing a cathode active material according to claim 11, wherein the coating metal precursor comprises a first coating metal precursor and a second coating metal precursor, and the first coating metal precursor is a titanium precursor.

14. The method for preparing a cathode active material according to claim 11, wherein the lithium phosphate compound comprises a compound represented by Formula 2 below:

[Formula 2] $\quad Li_a(Ti^{e+})_x(M1^{f+})_yP_dO_{(a+ex+fy+5d)/2}$

(in Formula 2 above, M1 is at least one selected from the group consisting of B, Al, Y, Sc, Zr, V, Nb, Ta, Cr, Ga, Sn, Sb and W, and a, e, f, x, y and d satisfy $0<a\leq5$, $1\leq e\leq4$, $1\leq f\leq5$, $0<x\leq1$, $0<y<5$, $1\leq x+y\leq5$, $0<d\leq8$).

15. The method for preparing a cathode active material according to claim 11, wherein a difference in polarity index between the first solvent and the second solvent is 4 or more.

16. The method for preparing a cathode active material according to claim 11, wherein a content of the second solvent in the precursor solution is less than that of the first solvent.

17. The method for preparing a cathode active material according to claim 11, further comprising performing ultrasonic treatment on the precursor solution before heat-treating the precursor solution.

18. The method for preparing a cathode active material according to claim 17, wherein by the ultrasonic treatment of the precursor solution, a first film comprising the second solvent is formed on the preliminary cathode active material, and a second film comprising the first solvent is formed on the first film.

19. The method for preparing a cathode active material according to claim 11, wherein the step of heat-treating the precursor solution comprises:
heating the precursor solution to a first temperature to evaporate the second solvent; and heating the precursor solution to a second temperature higher than the first temperature to evaporate the first solvent.

20. The method for preparing a cathode active material according to claim 19, wherein a boiling point of the first solvent is higher than that of the second solvent, and
the first temperature is higher than or equal to the boiling point of the second solvent and less than the boiling point of the first solvent, and the second temperature is higher than or equal to the boiling

[FIG. 1]

```
┌─────────────────────────────┐
│ Prepare mixture of          │ ～ S10
│ coating precursor and first solvent │
└─────────────────────────────┘
              ⇩
┌─────────────────────────────┐
│ Introduce second solvent into │ ～ S20
│ mixture                     │
└─────────────────────────────┘
              ⇩
┌─────────────────────────────┐
│ Mix preliminary cation active │ ～ S30
│ materials                   │
└─────────────────────────────┘
              ⇩
┌─────────────────────────────┐
│ Heat treatment              │ ～ S40
│ (fractional distillation)   │
└─────────────────────────────┘
```

[FIG. 2]

| | |
|---|---|
| Introduce preliminary cathode active material into mixture | S31 |

⇓

| | |
|---|---|
| Ultrasonic treatment | S32 |

⇓

| | |
|---|---|
| Heat to boiling point of second solvent or higher | S41 |

⇓

| | |
|---|---|
| Heat to boiling point of first solvent or higher | S42 |

[FIG. 3]

(S31)

20

14

35

12

30

[FIG. 4]

(S32)

[FIG. 5]

[FIG. 6]

## INTERNATIONAL SEARCH REPORT

| International application No. |
| --- |
| **PCT/KR2023/008277** |

| A. | CLASSIFICATION OF SUBJECT MATTER |
| --- | --- |

**H01M 4/36**(2006.01)i; **C01G 53/00**(2006.01)i; **C01B 25/45**(2006.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(positive electrode active material), 코어(core), 코팅(coating), 리튬 인산염(lithium phosphate), 티타늄(titanium), 두께(thickness), 용매(solvent)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2016-0049337 A (UNIST(ULSAN NATIONAL INSTITUTE OF SCIENCE AND TECHNOLOGY)) 09 May 2016 (2016-05-09)<br>See paragraphs [0045]-[0046]; and claims 1 and 5-6. | 1-10 |
| A | | 11-20 |
| Y | KR 10-2015-0039575 A (SAMSUNG ELECTRONICS CO., LTD.) 10 April 2015 (2015-04-10)<br>See paragraphs [0060], [0066], [0072]-[0075], [0082]-[0089], [0091] and [0109]; and claims 1 and 3-4. | 1-10 |
| A | KR 10-2016-0020627 A (SAMSUNG SDI CO., LTD.) 24 February 2016 (2016-02-24)<br>See entire document. | 1-20 |
| A | KR 10-2016-0142197 A (SAMSUNG SDI CO., LTD.) 12 December 2016 (2016-12-12)<br>See entire document. | 1-20 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 October 2023** | **06 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 636 847 A1**

**INTERNATIONAL SEARCH REPORT**

International application No.

**PCT/KR2023/008277**

| C. | DOCUMENTS CONSIDERED TO BE RELEVANT | | |
|---|---|---|
| Category* | Citation of document, with indication, where appropriate, of the relevant passages | Relevant to claim No. |
| A | JP 2020-113377 A (TOYOTA MOTOR CORP.) 27 July 2020 (2020-07-27)<br>See entire document. | 1-20 |

Form PCT/ISA/210 (second sheet) (July 2022)

## EP 4 636 847 A1

| Patent document cited in search report | | | Publication date (day/month/year) | Patent family member(s) | | | Publication date (day/month/year) |
|---|---|---|---|---|---|---|---|
| KR | 10-2016-0049337 | A | 09 May 2016 | CN | 107112533 | A | 29 August 2017 |
| | | | | CN | 107112533 | B | 25 August 2020 |
| | | | | EP | 3214673 | A1 | 06 September 2017 |
| | | | | EP | 3214673 | A4 | 25 April 2018 |
| | | | | EP | 3214673 | B1 | 03 April 2019 |
| | | | | JP | 2017-531911 | A | 26 October 2017 |
| | | | | JP | 6755253 | B2 | 16 September 2020 |
| | | | | KR | 10-1622352 | B1 | 18 May 2016 |
| | | | | US | 10566612 | B2 | 18 February 2020 |
| | | | | US | 2017-0338473 | A1 | 23 November 2017 |
| | | | | WO | 2016-068436 | A1 | 06 May 2016 |
| KR | 10-2015-0039575 | A | 10 April 2015 | JP | 2015-072772 | A | 16 April 2015 |
| | | | | JP | 6329745 | B2 | 23 May 2018 |
| | | | | KR | 10-2277905 | B1 | 15 July 2021 |
| | | | | US | 2015-0093651 | A1 | 02 April 2015 |
| | | | | US | 9692041 | B2 | 27 June 2017 |
| KR | 10-2016-0020627 | A | 24 February 2016 | CN | 105374995 | A | 02 March 2016 |
| | | | | EP | 2985819 | A1 | 17 February 2016 |
| | | | | JP | 2016-042462 | A | 31 March 2016 |
| | | | | US | 2016-0049644 | A1 | 18 February 2016 |
| KR | 10-2016-0142197 | A | 12 December 2016 | KR | 10-2425828 | B1 | 27 July 2022 |
| | | | | US | 10847787 | B2 | 24 November 2020 |
| | | | | US | 2016-0359166 | A1 | 08 December 2016 |
| JP | 2020-113377 | A | 27 July 2020 | CN | 111430682 | A | 17 July 2020 |
| | | | | JP | 7145394 | B2 | 03 October 2022 |
| | | | | US | 10991941 | B2 | 27 April 2021 |
| | | | | US | 2020-0220164 | A1 | 09 July 2020 |

Form PCT/ISA/210 (patent family annex) (July 2022)

22

**EP 4 636 847 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020180125408